# EUROPEAN PATENT APPLICATION

(11) **EP 4 180 480 A1**
(43) Date of publication of application: **17.05.2023**
(21) Application number: 21306593.1
(22) Date of filing: 16.11.2021
(51) Int. Cl.: C08G 69/08, C08L 77/02, C08G 69/40, C08K 3/016, C08K 3/04, B29C 45/00, B29C 48/00, C08K 3/32, B29K 77/00

(54) **UNREINFORCED FLAME-RETARDANT POLYAMIDE COMPOSITION**

(71) Applicant: ARKEMA FRANCE, 92700 Colombes (FR)
(72) Inventor: CIAPPEI, Alessandro, 26011 CASALBUTTANO (IT); SOLDI, Danila, 26011 CASALBUTTANO (IT); BALBINI, Davide, 26011 CASALBUTTANO (IT); AGLIO, Deborah, 26011 CASALBUTTANO (IT); VICARI, Mario, 26011 CASALBUTTANO (IT); CASSIN, Pierrick, 92700 COLOMBES (FR)
(74) Representative: Lavoix

(57) **Abstract**

The present invention relates to Polyamide composition comprising:
A) from 15 to 64% by weight of long chain polyamide having a ratio C/N greater than or equal to 8;
B) from 10 to 59% by weight of polyamide elastomer based on long chain polyamide having a ratio C/N greater than or equal to 8;
C) from 10 to 59% by weight of long chain polyamide having a ratio C/N greater than or equal to 8 that is different from compound A;
D) from 15 to 25% by weight of metal phosphinate flame retardant;
E) from 1 to 5% by weight of additives consisting in stabilizer and carbon black,
the percentages are percentages in weight based on the total weight of the composition.

## Description

The present invention concerns unreinforced polyamide composition comprising a halogen-free flame retardant system that can be used for railway applications. The invention also relates to the process for preparing such composition ad uses thereof.

Compositions for railway application have to meet some specific regulations. Especially, these compositions have to guarantee suitable flame retardant characteristics, smoke toxicity and oxygen index in accordance with DIN EN 45545. Compositions for railway have also to give producs having good mechanical properties and especially a tensile modulus from 750 to 1150 Mpa, a tensile strain at yield from 12 to 20 % especially ot guarantee a good binding and compression test; a tensile elongation at break greater than 90% and a high impact resistance.

Flame-retardant polyamide moulding compositions are known per se from the prior art: by way of example US20170037198 discloses a halogen-free Flame-retardant polyamide 12 moulding composition which is intended to have high flame resistance and high glow-wire resistance.

It is also known flame retardant polyamide composition from US 2021/018912. However, the compositions disclosed comprise melamine as flame-retardant component.

There is always a need of novel halogen-free Flame-retardant polyamide composition that have good flexibility and properties.

Especially, an objective of the invention is to find a formulation that could guarantee a suitable flame retardant charateristics, smoke toxicity and oxygen index in accordance with DIN EN 45545 and the best technical and mechanical properties (for example Tensile Modulus: 950 ± 200 Mpa, Tensile Strain at yield: from 12% to 20% to guarantee a good bending and compression test, Tensile Elongation at break: >90%, High impact resistance, etc.

Another objective is also to find the right additivation for the formulation that could guarantee a suitable flame retardant charateristics, smoke toxicity and oxygen index in order to reach Hazard Level 2 (HL2) in accordance with DIN EN 45545 (Oxygen Level (LOI): ≥ 28%, Smoke Density (Ds Max.): ≤ 600, Gas Toxicity (CIT NLP): ≤ 1,8 3).

Another objective is to provide such composition that are workable and homogeneous.

The objectives above are obtained by the present invention that relates to a polyamide composition comprising:
A) from 15 to 64% by weight of long chain polyamide having a ratio C/N greater than or equal to 8;
B) from 10 to 59% by weight of polyamide elastomer based on long chain polyamide having a ratio C/N greater than or equal to 8;
C) from 10 to 59% by weight of long chain polyamide having a ratio C/N greater than or equal to 8 that is different from compound A;
D) from 15 to 25% by weight of metal phosphinate flame retardant;
E) from 1 to 5% by weight of additives consisting in stabilizer and carbon black, the percentages are percentages in weight based on the total weight of the composition.

The composition according to the invention comprises a phosphorous-containing flame retardant. These compounds are primarily intended as flame retardant only for fiber-reinforced products. However, the present inventors have shown that such flame retardant can be advantageously used with unreinforced polyamide composition and especially unreinforced polyamide composition comprising a flexible polyamide, an impact modifier an elastomer polyamide. Advantageously, the use of these flame-retardants especially in a composition comprising flexible polyamide enables to achieve good results and good properties while overcoming the disadvantages of using melamine cyanurate as flame retardant that is usually used for such application.

Preferably, the polyamide composition is a unreinforced polyamide composition, i.e. a composition that does not contain reinforcing fibers.

Preferably, the polyamide composition according to the invention comprises:
from 25 to 45% by weight of A;
from 21 to 37% by weight of B;
from 10 to 15% by weight of C;
from 17 to 23% by weight of D;
from 2 to 4% by weight of E,
the percentages are percentages in weight based on the total weight of the composition.

The composition of the invention preferably does not comprise graphite.

A and C are long chain polyamides having a ratio C/N greater than or equal to 8. A is different to C, i.e. the ratio C/N is different in A and in C. Preferably, A is polyamide 12 and C is polyamide 11.

Preferably, compound C also comprises a plasticizer and an impact modifier.

The impact modifier, which amounts may comprise from 0 to 20% by weigth in relation to the total weight of compound C, is preferably constituted by a polymer having a flexural modulus below 100 MPa measured according to standard ISO 178 at 50% RH and a Tg below 0°C measured according to standard 11357-2 of 2013.

Preferably, the impact modifier consists of one or more polyolefins, a part or all thereof bearing a function chosen from the carboxylic acid, carboxylic anhydride and epoxide functions. Very specifically, the polyolefin can be chosen from an elastomeric ethylene and propylene copolymer (EPR), an elastomeric ethylene-propylene-diene copolymer (EPDM) and an ethylene/alkyl (meth)acrylate copolymer.

This impact modifier may be a functionalized polyolefin.

According to the invention, functionalized polyolefin is understood to mean the following polymers.

The functionalized polyolefin can be an alpha-olefin polymer having reactive units: the functionalities. Such reactive units are carboxylic acid, anhydride or epoxy functions.

The homopolymers or copolymers of alpha-olefins or diolefins can be given as examples of polyolefines, such as for example, ethylene, propylene, 1-butene, 1-octene, butadiene, and more specifically:
- the homopolymers and copolymers of ethylene, particularly LDPE, HDPE, LLDPE (linear low-density polyethylene), VLDPE (very low-density polyethylene) and metallocene polyethylene;
- homopolymers or copolymers of propylene;
- ethylene/alpha-olefin copolymers such as ethylene/propylene, EPRs (abbreviation for ethylene-propylene-rubber) and ethylene/propylene/diene (EPDM).
- styrene/ethylene-butene/styrene (SEBS), styrene/butadiene/styrene (SBS), styrene/isoprene/styrene (SIS), styrene/ethylene-propylene/styrene (SEPS) block copolymers;
- copolymers of ethylene with at least one product chosen from the salts or esters of unsaturated carboxylic acids such as alkyl (meth)acrylate (for example methyl acrylate), or the vinyl esters of saturated carboxylic acids such as vinyl acetate (EVA), where the proportion of comonomer can reach 40% by weight.

These polyolefins described above can be grafted, copolymerized or terpolymerized by reactive units (the functionalities), such as carboxylic acid, anhydride or epoxy functions.

More specifically these polyolefins are grafted or co- or ter-polymerized by unsaturated epoxides such as glycidyl (meth)acrylate, or by carboxylic acids or the corresponding salts or esters such as (meth)acrylic acid (which can be completely or partially neutralized by metals such as Zn, etc.) or by carboxylic acid anhydrides such as maleic anhydride.

The functionalized polyolefin may be chosen from the following, maleic anhydride or glycidyl methacrylate grafted (co)polymers wherein the graft rate is for example from 0.01 to 5% by weight:
- of PE, of PP, of copolymers of ethylene with propylene, butene, hexene, or octene containing for example from 35 to 80% by weight of ethylene;
- ethylene/alpha-olefin copolymers such as ethylene/propylene, EPRs (abbreviation for ethylene-propylene-rubber) and ethylene/propylene/diene (EPDM);
- styrene/ethylene-butene/styrene (SEBS), styrene/butadiene/styrene (SBS), styrene/isoprene/styrene (SIS), styrene/ethylene-propylene/styrene (SEPS) block copolymers;
- ethylene and vinyl acetate copolymers (EVA), containing up to 40% by weight of vinyl acetate;
- ethylene and alkyl (meth)acrylate copolymers, containing up to 40% by weight of alkyl (meth)acrylate;
- ethylene and vinyl acetate (EVA) and alkyl (meth)acrylate copolymers, containing up to 40% by weight of comonomers.

A functionalized polyolefin is for example a PE/EPR mixture, the ratio by weight whereof can vary widely, for example between 40/60 and 90/10, said mixture being co-grafted with an anhydride, in particular maleic anhydride, according to a graft rate for example of 0.01 to 5% by weight.

The functionalized polyolefin can also be selected from ethylene/propylene copolymers with predominantly maleic anhydride grafted propylene condensed with a mono-amine polyamide (or a polyamide oligomer) (products described in EP-A-0,342,066).

The functionalized polyolefin can also be a co- or terpolymer of at least the following units:
(1) ethylene;
(2) alkyl methacrylate or saturated carboxylic acid vinyl ester; and
(3) anhydride such as maleic or methacrylic anhydride or epoxies such as glycidyl methacrylate.

By way of example of functionalized polyolefins of the latter type, mention may be made of the following copolymers, where ethylene represents preferably at least 60% by weight and where the termonomer (the function) represents for example from 0.1 to 12% by weight of the copolymer:
- ethylene/alkyl (meth)acrylate/(meth)acrylic acid or maleic anhydride or glycidyl methacrylate copolymers;
- ethylene/vinyl acetate/maleic anhydride or glycidyl methacrylate copolymers;
- ethylene/vinyl acetate or alkyl (meth)acrylate/(meth)acrylic acid or maleic anhydride or glycidyl methacrylate copolymers.

In the preceding copolymers, (meth)acrylic acid can be salified with Zn or Li. The term "alkyl (meth)acrylate" denotes C1 to C8 alkyl methacrylates and acrylates, and can be chosen from methyl acrylate, ethyl acrylate, n-butyl acrylate, isobutyl acrylate, 2-ethyl-hexyl acrylate, cyclohexyl acrylate, methyl methacrylate and ethyl methacrylate.

Moreover, the previously cited polyolefins may also be crosslinked by any appropriate method or agent (diepoxy, diacid, peroxide, etc.); the term functionalized polyolefin also comprises mixtures of the previously cited polyolefins with a difunctional reagent such as a diacid, dianhydride, diepoxy, etc. that can react with these or mixtures of at least two functionalized polyolefins that can react together.

The copolymers mentioned hereinbefore may be statistically or sequentially copolymerized and have a linear or branched structure.

The molecular weight, the index MFI, the density of these polyolefins may also vary widely, which the person skilled in the art will know. MFI, abbreviation for melt flow index, is a measure of fluidity when melted. It is measured according to standard ASTM 1238. Advantageously the functionalized polyolefins are chosen from any polymer comprising alpha-olefin units and units carrying polar reactive functions like epoxy, carboxylic acid or carboxylic acid anhydride functions. As examples of such polymers, mention may be made of terpolymers of ethylene, alkyl acrylate and maleic anhydride or glycidyl methacrylate like Lotader^{®} from the Applicant or maleic anhydride grafted polyolefins like Orevac^{®} from the Applicant and terpolymers of ethylene, alkyl acrylate and (meth)acrylic acid. Mention may also be made of homopolymers or copolymers of by a carboxylic acid anhydride grafted polypropylene then condensed with polyamides or polyamide monoamine oligomers, as described in the application EP 0,342,066.

More specifically, the functionalized polyolefins are:
- ethylene, alkyl acrylate and maleic anhydride terpolymers;
- ethylene, alkyl acrylate and glycidyl methacrylate terpolymers;
- maleic anhydride grafted polypropylenes and polyethylenes;
- maleic anhydride grafted ethylene and propylene copolymers and possibly diene monomer;
- maleic anhydride grafted ethylene and octene copolymers;
and mixture thereof.

The impact modifier can also ba a non-functionalized polyolefin.

A non-functionalized polyolefinis conventionally a homopolymer or copolymer of alpha-olefins or diolefins, such as for example, ethylene, propylene, 1-butene, 1-octene, butadiene. By way of example, mention may be made of:
- the homopolymers and copolymers of polyethylene, particularly LDPE, HDPE, LLDPE (linear low-density polyethylene), VLDPE (very low density polyethylene) and metallocene polyethylene.
- homopolymers or copolymers of propylene;
- ethylene/alpha-olefin copolymers such as ethylene/propylene, EPRs (abbreviation for ethylene-propylene-rubber) and ethylene/propylene/diene (EPDM).
- styrene/ethylene-butene/styrene (SEBS), styrene/butadiene/styrene (SBS), styrene/isoprene/styrene (SIS), styrene/ethylene-propylene/styrene (SEPS) block copolymers;
- copolymers of ethylene with at least one product chosen from the salts or esters of unsaturated carboxylic acids such as alkyl (meth)acrylate (for example methyl acrylate), or the vinyl esters of saturated carboxylic acids such as vinyl acetate (EVA), where the proportion of comonomer can reach 40% by weight;
and mixture thereof.

The copolymers mentioned above may be statistically or sequentially copolymerized and have a linear or branched structure.

Advantageously the non-functionalized polyolefins are chosen from homopolymers or copolymers of polypropylene and any ethylene homopolymer or ethylene copolymer and a higher alpha-olefin comonomer such as butene, hexene, octene or 4-methyl-1-pentene. PP (polypropylene), high density polyethylene, medium-density polyethylenes, linear low-density polyethylenes, low-density polyethylenes and very low-density polyethylenes can be cited as examples. These polyethylenes are known by the person skilled in the art as being products from a free-radical method, from a Ziegler catalysis method, or, more recently, from metallocene catalysis. The copolymers of ethylene and vinyl acetate (EVA) are also preferred, such as those sold under the tradename EVATANE^{®} by the Applicant.

Advantageuosly, compound B are excluded from impact modifiers.

The plasticizer is selected particularly from benzene sulfonamide derivatives, such as n-butyl benzene sulfonamide (BBSA); ethyl toluene sulfonamide or N-cyclohexyl toluene sulfonamide; esters of hydroxy-benzoic acids, such as ethyl-2-hexyl parahydroxybenzoate and decyl-2-hexyl parahydroxybenzoate; esters or ethers of tetrahydrofurfuryl alcohol, such as oligoethyleneoxytetrahydrofurfuryl alcohol; and esters of citric acid or of hydroxy-malonic acid, such as oligoethyleneoxy malonate.

Using a mixture of plasticizers would not be outside the scope of the invention.

The particularly preferred plasticizer is n-butyl benzene sulfonamide (BBSA).

Preferably, the polyamides of the invention are aliphatic. And preferably, said at least semi-crytalline aliphatic polyamide is obtained from polycondensation of at least one lactam or from the polycondensation of at least one aminoacid or from the polycondensation of at least a diamine X with at least a dicarboxylic acid Y.

When said at least semi-crytalline aliphatic polyamide is obtained from polycondensation of at least one lactam, said at least one lactam can be chosen among C8 to C18 lactam, preferably from C10 to C18 lactam, more preferably from C10 to C12 lactam. A C8 to C18 lactam is for example decanolactam, undecanolactam and lauryllactam. When said at least semi-crytalline aliphatic polyamide is obtained from polycondensation of at least one lactam, it can comprise only one lactam or different lactams. Advantageously, said at least semi-crytalline aliphatic polyamide is obtained from polycondensation of one lactam and said lactam is chosen among lauryllactam and undecanolactam, preferably lauryllactam. When said at least semi-crytalline aliphatic polyamide is obtained from polycondensation of at least one aminoacid, said at least one aminoacid can be chosen among C8 to C18 aminoacid, preferably C10 to C18 aminoacid, more preferably C10 to C12 aminoacid. An aminoacid from C8 to C18 is for example 9-aminononanoic acid; 10-aminodecanoic acid, 10-aminoundecanoic acid, 12-aminododecanoic acid and 11-aminoundecanoic acid and their derivatives especially N-heptyl-11-aminoundecanoic acid. When said at least semi-crytalline aliphatic polyamide is obtained from polycondensation of at least one aminoacid, it can comprise only one aminoacid or different aminoacids. Advantageously, said at least semi-crytalline aliphatic polyamide is obtained from polycondensation of one aminoacid and said aminoacid is chosen among 10-aminodecanoic acid, 12-aminododecanoic acid and 11-aminoundecanoic acid, advantageously 11-aminoundecanoic acid.

When said at least semi-crytalline aliphatic polyamide is obtained from polycondensation of at least a diamine X with at least a dicarboxylic acid Y, said at least one diamine X is a C6-C36 diamine X, preferably C6-C18, preferably C6-C12, more preferably C10-C12 and said at least one diacid Y is a a C6-C36 diacid Y, preferably C6-C18, preferably C6-C12, more preferably C10-C12, preferably said at least one diamine X is an aliphatic diamine and that at least diacid Y is an aliphatic diacid Y.

The diamine can be linear or branched, it is advantageously linear.

Said at least C6-C36 diamine X can in particular be chosen among 1,6-hexamethylene diamine, 1,7-heptamethylenediamine, 1,8-octamethylenediamine, 1,9-nonamethylenediamine, 1,10-decamethylenediamine, 1,11-undecamethylenediamine, 1,12-dodecamethylediamine, 1,13-tridecamethylenediamine, 1,14-tetradecamethylenediamine, 1,16-hexadecamethylenediamine and 1,18-octadecamethylenediamine, octadecenediamine, eicosanediamine, docosanediamine and diamines obtained from fatty acid.

Advantageously, said at least one diamine X is a C6-C18 diamine X and is chosen among 1,6-hexamethylenediamine, 1,7-heptamethylenediamine, 1,8-octamethylenediamine, 1,9-nonamethylenediamine, 1,10-decamethylenediamine, 1,11-undecamethylenediamine, 1,12-dodecamethylenediamine, 1,13-tridecamethylenediamine, 1,14-tetradecamethylenediamine, 1,16-hexadecamethylenediamine and 1,18-octadecamethylenediamine.

Advantageously, said at least one diamine X is a C6 to C12 diamine X and is in particular chosen among 1,6-hexamethylenediamine, 1,7-heptamethylenediamine, 1,8-octamethylenediamine, 1,9-nonamethylenediamine, 1,10-decamethylenediamine, 1,11-undecamethylenediamine, 1,12-dodecamethylenediamine.

Advantageously, said at least one diamine X is a C6 to C12 diamine X and is in particular chosen among 1,6-hexamethylenediamine, 1,7-heptamethylenediamine, 1,8-octamethylenediamine, 1,9-nonamethylenediamine, 1,10-decamethylenediamine, 1,11-undecamethylenediamine, 1,12-dodecaméthylenediamine.

Advantageously, said at least one diamine X is a C10 to C12 diamine X and is in particular chosen among 1,10-decamethylenediamine, 1,11-undecamethylenediamine, 1,12-dodecamethylenediamine.

Said at least one dicarboxylic acid Y is a C6 to C36 dicarboxylic acid and can be chosen among adipic acid, suberic acid, azelaic acid, sebacic acid, undecanedioic acid, dodecanedioic acid, brassylic acid, tetradecanedioic acid, pentadecanedioic acid, hexadecanedioic acid, octadecanedioic acid, and diacids obtained from fatty acids.

The diacid can be linear or branched. Advantageously it is linear.

Advantageously, said at least one dicarboxylic acid Y is a C6 to C18 dicarboxylic acid and can be chosen among adipic acid, suberic acid, azelaic acid, sebacic acid, undecanedioic acid, dodecanedioic acid, brassylic acid, tetradecanedioic acid, pentadecanedioic acid, hexadecanedioic acid, octadecanedioic acid. Avantageously, said at least dicarboxylic acid Y is a C6 to C12 and can be chosen among adipic acid, suberic acid, azelaic acid, sebacic acid, undecanedioic acid, dodecanedioic acid.

Advantageously, said at least one dicarboxylic acid Y is a C10 to C12 dicarboxylic acid and can be chosen among sebacic acid, undecanedioic acid, dodecanedioic acid,

When said wemi-crystalline aliphatic polyamide is obtained from polycondensation of at least one dimaine X and at least one dicarboxylic acid Y it can comprise one diamine or different diamin and one dicarboxylic acid or different dicarboxylic acid. Advantageously, said semi-crystalline aliphatic polyamide is obtained from polycondensation of one dimaine X and one dicarboxylic acid Y.

Preferably compound C has a low modulus preferably lower than 300 Mpa.

Preferably compound A is rigid for extrusion and does not comprise impact modifier and plasticizer. The tensile modulus of compound A is preferably from 1000 to 1500 Mpa. The MFR (melt flow rate) of compound A is for example comprised between 0.5 and 15g/10 min.

Compound B is a copolymer comprising polyether (PE) block(s) and polyamide (PA) block(s). Such copolymer are also called PEBA. The polyamide block(s) of compound A is based on long chain polyamide having a ratio C/N greater than or equal to 8. The polyamide of compound B can be the same as the one of compound A or can be different.

The polyether (PE) block(s) and polyamide (PA) block(s) (PEBA) polymers copolymers comprising amide units (Ba1) and polyether units (Ba2) said amide unit (Ba1) corresponding to an aliphatic repeating unit chosen among a unit obtained from at least one aminoacid or a unit obtained from at least one lactame, or a unit X.Y obtained from the polycondensation of:
- at least one diamine, said diamine being preferably chosen among aliphatic diamine linerr or branched or mixture thereof; and
- at least one carboxylic diacid, said diacid being preferably chosen among :
   A linear or branched aliphatic diacid or a mixture thereof,
   said amine and said diacid comprising from 4 to 36 carbon atoms, advantageously from 6 to 18 carbon atoms;
   said polyether units (Ba2) can be issued from at least one étant notamment issus d'au moins un polyalkylene ether polyol, especially one polyalkylene ether diol,
   PEBA especially result from the copolycondensation of polyamides sequences with reactive termination with polyether units with reactive termination such as, for example:
      1) polyamide sequences with diamine chain-ends diamines with polyoxyalkylene sequence with dicarboxylic chain-end.
      2) polyamide sequences with dicarboxylic chain-ends with polyoxyalkylene with diamine chain-ends obtained by cyanoethylation and hydrogenation of aliphatic polyoxyalkylene sequences alpha-omega dihydroxylated called polyalkylene ether diols (polyetherdiols).
      3) polyamides sequences with dicarboxylic chain-ends with polyetherdiols, the products obtained being, in this particular case, polyetheresteramides. The copolymers of the invention are advantageously of this type.

The polyamide sequences with dicarboxylic chain-ends come for example from the condensation of polyamide precursors in the presence of chain limiting carboxylic diacid. The polyamide sequences with diamines chain-ends come for example from the condensation of polyamide precursors in the presence of chain limiting diamine.

The polymers with polyamide blocks and polyether blocks can also comprise randomly distributed units. These polymers can be prepared by simultaneous reaction of polyether and polyamide blocks precursors. For example, polyetherdiol, polyamide precursors and a chain-limiting diacid can be reacted. A polymer is obtained essentially having polyether blocks, polyamide blocks of very variable length, but also the various reactants having reacted randomly which are distributed randomly (statistically) along the polymer chain.

It is also possible to react polyetherdiamine, polyamide precursors and a chain-limiting diacid. A polymer is obtained essentially having polyether blocks, polyamide blocks of very variable length, but also the various reactants having reacted randomly which are distributed randomly (statistically) along the polymer chain.Amide unit (Ba1) :
The amide unit (Ba1) corresponds to an aliphatic repeating unit as defined above. Advantageously, the amide unit (Ba1) is chosen from polyamide 11, polyamide 12, polyamide 610, polyamide 612, polyamide 1010, polyamide 1012, in particular polyamide 11.

More advantageously, the amide unit (Ba1) is chosen from polyamide 11 and polyamide 12, in particular polyamide 11.

Polyether unit (Ba2) :
The polyether units are in particular derived from at least one polyalkylene ether polyol, in particular they are derived from at least one polyalkylene ether polyol, in other words, the polyether units consist of at least one polyalkylene ether polyol. In this embodiment, the expression "of at least one polyalkylene ether polyol" means that the polyether units consist exclusively of alcohol chain ends and therefore cannot be a compound of the triblock polyetherdiamine type.

The composition of the invention is therefore free of polyetherdiamine triblock. Advantageously, the polyether units (Ba2) are chosen from polyethylene glycol (PEG), polypropylene glycol (PPG), polytrimethylene glycol (PO3G), polytetramethylene glycol (PTMG) and their mixtures or their copolymers, in particular PTMG.

The number-average molecular mass (Mn) of the polyether blocks is advantageously from 200 to 4000 g / mole, preferably from 250 to 2500 g / mole, in particular from 300 and 1100 g / mole.

PEBA can be prepared by the process according to which:
- in a first step, the polyamide (Ba1) blocks are prepared by polycondensation
   of the lactam (s), or
   of the amino acid (s), or
   of the diamine (s) and of the dicarboxylic acid (s); and where appropriate, one or more comonomers chosen from lactams and alpha-omega-aminocarboxylic acids;
   in the presence of a chain limiter chosen from dicarboxylic acids; then
- in a second step, the polyamide blocks (Ba1) obtained are reacted with polyether blocks (Ba2), in the presence of a catalyst.

The general two-step preparation method of the copolymers of the invention is known and is described, for example, in French patent FR 2 846 332 and in European patent EP 1 482 011.

The reaction for forming the block (Ba1) is usually carried out between 180 and 300 ° C, preferably from 200 to 290 ° C, the pressure in the reactor is established between 5 and 30 bars, and it is maintained at about 2 to 3 hours. The pressure is slowly reduced by bringing the reactor to atmospheric pressure, then the excess water is distilled, for example, for an hour or two.

The polyamide containing carboxylic acid ends having been prepared, the polyether and a catalyst are then added. The polyether can be added in one or more steps, as can the catalyst. According to an advantageous form, the polyether is added first, the reaction of the OH ends of the polyether and of the COOH ends of the polyamide begins with formation of ester bonds and elimination of water. As much water as possible is removed from the reaction medium by distillation, then the catalyst is introduced to complete the binding of the polyamide blocks and of the polyether blocks. This second step is carried out with stirring, preferably under a vacuum of at least 15 mm Hg (2000 Pa) at a temperature such that the reactants and the copolymers obtained are in the molten state. For example, this temperature can be between 100 and 400 ° C and most often 200 and 300 ° C. The reaction is followed by measuring the torque exerted by the molten polymer on the stirrer or by measuring the electrical power consumed by the stirrer. The end of the reaction is determined by the value of the target torque or power.

One or more molecules used as an antioxidant, for example Irganox^{®} 1010 or Irganox^{®} 245, can also be added during the synthesis, at the most opportune time.

We can also consider the process for preparing PEBA such that all the monomers are added at the start, in a single step, to carry out the polycondensation:
of the lactam (s), or
of the amino acid (s), or
of the diamine (s) and of the dicarboxylic acid (s); and if appropriate, the other or other polyamide comonomers;
   - in the presence of a chain limiter chosen from dicarboxylic acids;
   - in the presence of blocks (Ba2) (polyether);
   - in the presence of a catalyst for the reaction between the flexible blocks (Ba2) and the blocks (Ba1).

Advantageously, said dicarboxylic acid, which is introduced in excess relative to the stoichiometry of the diamine (s), is used as chain limiter.

Advantageously, a derivative of a metal selected from the group formed by titanium, zirconium and hafnium or a strong acid such as phosphoric acid, hypophosphorous acid or boric acid is used as catalyst.

The polycondensation can be carried out at a temperature of 240 to 280 ° C.

In general, the copolymers with known ethers and amides units consist of linear and semi-crystalline aliphatic polyamide blocks (for example the "Pebax" from Arkema).

In one embodiment, the copolyamide containing amide units (Ba1) and polyether units (Ba2) has a density greater than or equal to 1, in particular greater than or equal to 1.01, in particular greater than or equal to 1.02, such as as determined according to ISO 1183-3: 1999.

In one embodiment, the polyetheramines are excluded from the polyether units (Ba2).

Preferably, the polyamide of compound B is the same as the polyamide of compound A and is preferably polyamide 12. Preferably compound B has a SHORE D comprised between 50 and 56. Shore D is determined according to ISO 868.

Preferably, compound A is polyamide 12, compound B is polyamide elastomer based on polyamide 12 and compound C is polyamide 11.

Advantageously, the polyamide of the invention can be recycled polyamide.

Preferably, the polyamide composition according to the invention consists of:
A) from 25 to 45% by weight of polyamide 12;
B) from 21 to 37% by weight of polyamide elastomer based on polyamide 12;
C) from 10 to 15% by weight of polyamide 11;
D) from 17 to 23% by weight of metal phosphinate flame retardant;
E) from 2 to 4% by weight of additives consisting in stabilizer and carbon black, the percentages are percentages in weight based on the total weight of the composition.

The polyamide composition according to the invention comprises metal phosphinate flame retardant. This metal phosphinate flame retardant can be of any type known by the skilled person and is preferably selected among those described in US 2008/0274355 and especially a metal salt chosen among a metal salt of phosphonic acid, a metal salt of diphosphonic acid, a polymer comprising at least one metal salt of phosphonic acid, a polymer comprising at least one metal salt of diphosphonic acid, or mixture thereof.

The metal salt of phosphonic acid can be of formula (I) and the metal salt of diphosphonic acid can be of formula (II): 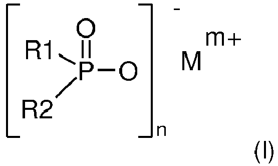 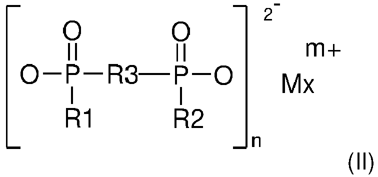 wherein
R1 and R2, independently represents a C1-C6 alkyl group , linear or branched, or an aryl group especially having from 6 to 10 carbon atoms;
R3 represents a C1-C10 linear or branched alkylene group, a C6-C10 arylene group, a C6-C10 alkylarylene group or a C6-C10 arylalkylene group,
M is a ion chosen among Mg, Ca, Al, Sb, Sn, Ge, Ti, Zn, Fe, Zr, Ce, Bi, Sr, Mn, Li, Na, K and/or a protonated amine base;
m is an interger from 1 to 4,
n is an integer from 1 to 4,
x is an integer from 1 to 4,
n and m are chosen so as to obtain a neutral salt, i.e. a salt that does not carry an electrical charge.

Preferably M represents Ca, Mg, Al, or Zn.

Preferably, R1 and R2, independently represents a group methyl, ethyl, n-propyl, iso-propyl, n-butyl, tertio-butyl, n-pentyl or phenyl.

Preferably R3 represents a methylene, ethylene, n-propylene, iso-propylene, n-butylene, tertio-butylene, n-pentylene, n-octylene, n-dodecylene; phenylene, naphthylene; methylphenylene, ethylphenylene, tertio-butylphenylene, methylnaphthylene, ethylnaphthylene, tertio-butylnaphthylene; phenylmethylene, phenylethylene, phenylpropylene, or phenylbutylene.

An example of metal phosphinate flame retardant is Exolit^{®} OP1312 sold by Clariant.

Advantageously, the composition of the invention is homogeneous and gives material with very good flame properties in accordance with UL94. The composition obtained has also advantagesouly a good processability even with the percentages of additives. Advantagesouly, the mechanical and rheological properties of the composition give to the final application good processability and qualities in terms of hardness and flexibility.

The composition according to the invention can be manufactured by extrusion or dry-blend the various constituents using standard techniques for thermoplastics.

The invention also provides a granulate or powder, or components, made of the polyamide composition as described above. The composition of the invention can advantageously be processed by extrusion processes or injection moulding processes.

The polyamide composition of the invention advantageously enables to prepare fire-protected flexible components or objects in particular for railway application, preferably as coating, covering, film, profile, corrugated or non-corrugated pipe, hollow body, gasket, cladding, holder, housing, sheating, or electrical or electronic component, plugged or fan. Preferably and advantageously, the components and objects obtained meet the requirements of DIN EN 45545 standard and preferably the hazard level 2 (HL2) of DIN EN 45545. The DIN EN 45545 standard comprises especially requirements regarding LOI (Limiting Oxygen Index) and a low smoke values.

The composition of the invention preferably enables to obtain components or objects having one or more, preferably all, the following features:
- LOI greater than or equal to 28%; and/or
- Tensile modulus (or modulus of elasticity) comprised from 750 to 1150 MPa; and/or
- Tensile strain at yield greater than 12%, preferably from 12 to 20% especially to guarantee a good bending and compression test; and/or
- Tensile elongation at break (or tensile strain at break) greater than 90%, preferably greater than 100%; and/or
- Smoke density (Ds Max) lower than or equal to 600; and/or
- Gas toxicity (CIT _{NLP}) lower than or equal to 1.8.

The LOI is the minimal oxygen concentration of an oxyden-nitrogen mixture at which a vertically arranged test sample continues to burn under the test conditions. LOI is determined in accordance with ISO4589.

Tensile modulus of elasticity, tensile strain at yield and tensile strain at break are determined in accordance with ISO527 with a tensile testing velocity of 1 mm/min for tensile modulus and of 5 mm/min for strain at yield and strain at break. The tests are carried out on the test samples in the dry state or after conditioning 24 hours at 23°C/50% relative humidity.

Flexural modulus is determine in accordance with ISO178.

Smoke density is measured in accordance with UNI EN45545-2-2015.

Gas toxicity is determined in accordance with UNI EN45545-2-2015.

The present invention also relates to a process for the production of the components and articles mentioned above that is characterized in that the polyamide composition of the invention is moulded in an extrusion process or extrusion blow moulding process, an injection moulding process or an in-mould-coating process.

The present invention also relates to the components or articles mentioned above and made of a polyamide composition according to the invention and obtained by extrusion or moulding, preferably injection moulding, processes as mentioned above, preferably extrusion processes.

The present invention also relates to a component or article made of a polyamide composition according to the invention for fire-protected applications in the railway sector for example as coating, covering, film, profile, corrugated or non-corrugated pipe, hollow body, gasket, cladding, holder, housing, sheating, or electrical or electronic component, plugged or fan.

The present invention also relates to the use of the polyamide composition according to the invention for preparing component or object for fire-protected applications in the railway sector for example as coating, covering, film, profile, corrugated or non-corrugated pipe, hollow body, gasket, cladding, holder, housing, sheating, or electrical or electronic component, plugged or fan, especially by extrusion or moulding, preferably injection moulding, processes as mentioned above, preferably extrusion processes.

### Examples

### Example 1 : Preparation of two compositions according to the invention

The following two compositions (C1 and C2) have been prepared according to table 1 by known processes using a corotative twin screw with 40D with the following parameters: T1 : 220°C, T2 : 230°C, T3: 240°C, T4: 235°C, T5: 230°C, T6: 230°C, T7: 230°C, T8: 230°C, Flange 230°C, screen changer 2 : 240°C, screen changer 1 : 240°C, DIE : 250°C, motor speed preferably from 380 rpm to 500 rpm and output 75 kg/h.

**Table 1**

| | C1 (% by weight) | C2 (% by weight) |
|---|---|---|
| Polyamide 12 (A) | 41 | 30.5 |
| PEBA based on polyamide 12 (B) | 25.5 | 36 |
| Polyamide 11 flexible and impact modified (C) | 10 | 10 |
| Exolit OP1312 (D) | 20 | 20 |
| Additives (E) (3% masterbatch and 0.5% antioxidant) | 3.5 | 3.5 |

### Example 2 : Preparation of a comparative composition

A comparative composition (CC1) obtained as in example 1 is prepared according to table 2:

**Table 2**

| | CC1 (% by weight) |
|---|---|
| Polyamide 12 (A) | 25 |
| PEBA based on polyamide 12 (B) | 46.5 |
| Polyamide 11 flexible and impact modified (C) | 0 |
| Cyanamide melamine (comparative flame retardant) | 25 |
| Additives (E) (3% masterbatch and 0.5% antioxidant) | 3.5 |

### Example 3 : Analysis of components obtained with the compositions C1, C2 and CC1

Components have been prepared by injection moulding of the compositions C1, C2 and CC1. After injection moulding, the samples obtained are conditioned 24 hours at 23°C/50% (relative humidity).

The parameters for measurement of flexural modulus are:
Test speed : 2 mm/min
Span between specimen supports : 64 mm

The parameters for measurement of tensile modulus are:
CONDITIONING : DAM (Dry as molded)
TEST SPEED : 1mm/min for modulus - 5mm/min for break and yield (stress and strain)
SPAN BETWEEN SPECIMENS SUPPORTS : 115mm ± 1

Impact resistance and notched impact resistance by the charpy method were measured in accordance with ISO 179/1eU and, respectively, ISO179/1eA on an ISO test sample at a temperature of 23°C.

After injection moulding, the samples obtained are conditioned 24 hours at 23°C/50% (relative humidity) and left for one hour into climatic chamber at -30°C and -50°C for the cold impact test, the test is performed within 5 seconds of being placed on the support of the testing machine.

MFR (Melt Flow Rate) is determined according to ISO1133 using melt flow tester where the material (granules obtained just after extrusion) is melted in a heatable cylinder at a temperature of 230°C, load 2.16 kg.

Regarding flame classification according to UL94 for V0 the thickness of samples tested is 3.2 mm and for V1 the thickness of samples tested is 1.6 mm.

The results are given in table 3 below:

**Table 3**

| | C1 | C2 | CC1 |
|---|---|---|---|
| MFR (g/10 min) | 1-10 | 1-10 | 11 |
| Tensile modulus (MPa) | 1000-1150 | 750-900 | 892 |
| Tensile strain at yield (%) | ≥ 12 | ≥ 12 | 14 |
| Tensile strain at break (%) | > 100 | > 100 | 189 |
| Flexural modulus (MPa) | 850-950 | 750-850 | n.d. |
| Charpy impact strength + 23°C (Kj/m²) | no breaks | no breaks | no breaks |
| Charpy impact strength -30°C (Kj/m²) | 70-80C* | C(N) | 126C* |
| Charpy impact strength -50°C (Kj/m²) | 70-80C* | 80-90C* | 94C* |
| Charpy notched impact strength +23°C (Kj/m²) | 7-10C* | 12 H* | 6C* |
| Charpy notched impact strength - 30°C (Kj/m²) | 4-6C* | 4-6C* | 4C* |
| Charpy notched impact strength - 50°C (Kj/m²) | 4-6C* | 4-6C* | 4C* |
| LOI (%) | 29 | 29 | 22.6 |
| UL 94 (3.2 mm) class | V0 | V0 | V2 |
| UL 94 (1.6 mm) | V1 | V1 | V2 |

The results show that the composition of the invention enables to obtain good processability and good properties and that the choice of the flame retardant in combination with compound A, B and C enables to reach good properties in comparison with other flame retardant and other combinations of polyamide.

## Claims

1. Polyamide composition comprising:
A) from 15 to 64% by weight of long chain polyamide having a ratio C/N greater than or equal to 8;
B) from 10 to 59% by weight of polyamide elastomer based on long chain polyamide having a ratio C/N greater than or equal to 8;
C) from 10 to 59% by weight of long chain polyamide having a ratio C/N greater than or equal to 8 that is different from compound A;
D) from 15 to 25% by weight of metal phosphinate flame retardant;
E) from 1 to 5% by weight of additives consisting in stabilizer and carbon black,
the percentages are percentages in weight based on the total weight of the composition.

2. The polyamide composition according to claim 1 comprising:
from 25 to 45% by weight of A;
from 21 to 37% by weight of B;
from 10 to 15% by weight of C;
from 17 to 23% by weight of D;
from 2 to 4% by weight of E.

3. The polyamide composition according to claim 1 or 2, wherein the polyamide of compound B is the same as the polyamide of compound A.

4. The polyamide composition according to any one of claims 1 to 3, wherein A is polyamide 12.

5. The polyamide composition according to any one of claims 1 to 4, wherein B is polyamide elastomer based on polyamide 12.

6. The polyamide composition according to any one of claims 1 to 5, wherein C is polyamide 11.

7. The polyamide composition according to any one of claims 1 to 6 consisting of:
F) from 25 to 45% by weight of polyamide 12;
G) from 21 to 37% by weight of polyamide elastomer based on polyamide 12;
H) from 10 to 15% by weight of polyamide 11;
I) from 17 to 23% by weight of metal phosphinate flame retardant;
J) from 2 to 4% by weight of additives consisting in stabilizer and carbon black,
the percentages are percentages in weight based on the total weight of the composition.

8. The polyamide composition according to any one of claims 1 to 7 wherein the metal phosphinate flame retardant is selected in the group consisting of a metal salt chosen among a metal salt of phosphonic acid, a metal salt of diphosphonic acid, a polymer comprising at least one metal salt of phosphonic acid, a polymer comprising at least one metal salt of diphosphonic acid, or mixture thereof.

9. The polyamide composition according to any one of claims 1 to 7 wherein the metal phosphinate flame retardant is selected in the group consisting of a metal salt of phosphonic acid of formula (I) and a metal salt of diphosphonic acid of formula (II): 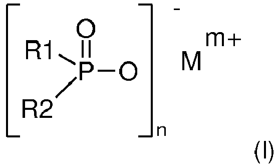 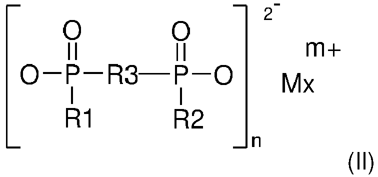 wherein
R1 and R2, independently represents a C1-C6 alkyl group , linear or branched, or an aryl group especially having from 6 to 10 carbon atoms;
R3 represents a C1-C10 linear or branched alkylene group, a C6-C10 arylene group, a C6-C10 alkylarylene group or a C6-C10 arylalkylene group,
M is a ion chosen among Mg, Ca, Al, Sb, Sn, Ge, Ti, Zn, Fe, Zr, Ce, Bi, Sr, Mn, Li, Na, K and/or a protonated amine base;
m is an interger from 1 to 4,
n is an integer from 1 to 4,
x is an integer from 1 to 4,
n and m are chosen so as to obtain a neutral salt, i.e. a salt that does not carry an electrical charge.

10. A component made of a polyamide composition according to any one of claims 1 to 9 and obtained by extrusion or injection moulding processes.

11. A component made of a polyamide composition according to any one of claims 1 to 9 for fire-protected applications in the railway sector for example as coating, covering, film, profile, corrugated or non-corrugated pipe, hollow body, gasket, cladding, holder, housing, sheating, or electrical or electronic component, plugged or fan.

12. Use of the polyamide composition according to any one of claims 1 to 9 for preparing component for fire-protected applications in the railway sector for example as coating, covering, film, profile, corrugated or non-corrugated pipe, hollow body, gasket, cladding, holder, housing, sheating, or electrical or electronic component, plugged or fan, especially by extrusion or injection moulding processes.
